# EUROPÄISCHE PATENTSCHRIFT

(11) **EP 1 682 817 B1**
(45) Veröffentlichungstag und Bekanntmachung des Hinweises auf die Patenterteilung: **12.12.2007**
(21) Anmeldenummer: 04790139.2
(22) Anmeldetag: 06.10.2004
(51) Int. Cl.: F21V 7/00, B60Q 1/00

(54) **FAHRZEUGLEUCHTE**
VEHICLE LIGHT
PHARE DE VEHICULE

(30) Priorität: 13.11.2003 DE 10353087
(43) Veröffentlichungstag der Anmeldung: 26.07.2006
(73) Patentinhaber: Bayerische Motoren Werke Aktiengesellschaft, 80809 München (DE)
(72) Erfinder: BEFELEIN, Carsten, 85540 Haar (DE)
(86) Internationale Anmeldenummer: PCT/EP2004/011140
(87) Internationale Veröffentlichungsnummer: WO 2005/047765

(56) Entgegenhaltungen:
- DE-A- 4 418 135
- DE-A- 10 105 303
- DE-A- 19 916 845
- FR-A- 1 025 329
- US-A- 1 262 394

## Beschreibung

Die Erfindung betrifft eine Fahrzeugleuchte, insbesondere eine Frontleuchte eines Kraftfahrzeuges, mit einer ersten Leuchteneinheit, die eine Primärlichtquelle und einen Primärreflektor umfasst und eine innere Lichtaustrittsfläche aufweist, und mit einer zweiten Leuchteneinheit, die eine Sekundärlichtquelle und eine koaxial um die innere Lichtaustrittsfläche der ersten Leuchteneinheit angeordnete ringförmige äußere Lichtaustrittsfläche aufweist.

In Fahrzeugleuchten werden häufig mehrere Leuchteneinheiten in unterschiedlicher Ausbildung und Anordnung in einem einzigen Leuchtengehäuse mit einer gemeinsamen Abdeckscheibe zusammengefasst. Ausschlaggebend dafür können Designvorgaben, beengte Platzverhältnisse, und die Reduzierung von Herstellungs- und Montagekosten sein. Bei Heckleuchten wie auch bei Frontleuchten von Kraftfahrzeugen sind die Leuchteneinheiten bei einer Zusammenfassung mehrerer Leuchteneinheiten zumeist nebeneinander oder übereinander angeordnet und weisen jeweils eine separate Kammer mit einer eigenen Lichtquelle, einem zugeordneten Reflektor, und ggf. auch einer separaten, der Funktion z.B. durch eine entsprechende Einfärbung angepassten Abdeckscheibe auf.

In den letzten Jahren sind viele Fahrzeugleuchten, insbesondere in Form von Frontleuchten von Kraftfahrzeugen mit integrierten Abblendlicht- oder Fernlichtscheinwerfern, bekannt geworden, bei denen eine erste Leuchteneinheit mit einer ersten Lichtquelle und einem Reflektor versehen ist und eine im Bereich einer Leuchtenachse angeordnete geschlossene innere Lichtaustrittsfläche aufweist, und bei denen eine zweite Leuchteneinheit mit einer zweiten Lichtquelle versehen ist und eine koaxial um die innere Lichtaustrittsfläche der ersten Leuchteneinheit angeordnete ringförmige äußere Lichtaustrittsfläche aufweist.

So ist aus der US 4 949 226, der GB 2 245 697 A, und der DE 198 14 480 A1 jeweils eine Fahrzeugleuchte in Form einer Frontleuchte eines Kraftfahrzeuges bekannt, bei der eine Primärleuchte jeweils als Projektionsscheinwerfer mit einer Primärlichtquelle, einem Primärreflektor, und einer kreisrunden Projektionslinse ausgebildet ist. Im wesentlichen zur Ausfüllung der Kreisringfläche zwischen der relativ kleinen, durch die Projektionslinse gebildeten Lichtaustrittsfläche der Primärleuchte und dem deutlich größeren Außenumfang des Leuchtengehäuses bzw. der Abdeckscheibe der Fahrzeugleuchte, d.h. im wesentlichen aus Designgründen, ist die Kreisringfläche jeweils weitgehend von einer ringförmigen transparenten Scheibe ausgefüllt, die in etwa senkrecht zu der Leuchtenachse ausgerichtet ist, und die durch mindestens eine separate Lichtquelle beleuchtbar ist. Da die derart ausgebildete zweite Leuchteneinheit keine große Lichtstärke aufweist, kann sie nur als Sekundärleuchte mit geringer erforderlicher Lichtstärke, wie z.B. als Standleuchte oder als Parkleuchte, verwendet werden. Zwar kann die äußere Erscheinungsform einer derartigen Fahrzeugleuchte, die im wesentlichen durch die Größe und Form der Abdeckscheibe bestimmt wird, weitgehend frei gestaltet werden, jedoch sind zur Vermeidung einer ästhetischen Disharmonie zwischen der kreisscheibenförmigen Lichtaustrittsfläche des Projektionsscheinwerfers und einer möglichen eckigen Außenkontur des Leuchtengehäuses bzw. der Abdeckscheibe derartige Projektionsleuchten bislang nur in stark gerundeter Form, d.h. als runde oder ovale Fahrzeugleuchte, realisiert worden.

Des weiteren ist aus der DE 100 40 302 A1 und der EP 0 900 694 A2 jeweils eine Fahrzeugleuchte in Form einer Frontleuchte eines Kraftfahrzeuges bekannt, bei der eine erste Leuchteneinheit eine Primärlichtquelle und einen Primärreflektor umfasst und eine im Bereich der Leuchtenachse angeordnete geschlossene innere Lichtaustrittsfläche aufweist, und bei dem eine zweite Leuchteneinheit eine Sekundärlichtquelle und eine koaxial um die innere Lichtaustrittsfläche der ersten Leuchteneinheit angeordnete ringförmige äußere Lichtaustrittsfläche aufweist. Das Licht der Sekundärlichtquelle wird in einen oder mehrere Lichtleiter eingekoppelt und jeweils in einen als Auskoppelelement ausgebildeten und im Bereich der äußeren Lichtaustrittsfläche angeordneten Lichtleiter geführt. Durch diese Bauart ergibt sich zwar eine erhöhte Freiheit zur Formgestaltung der Fahrzeugleuchte. So kann beispielsweise die Sekundärlichtquelle bei beengten Platzverhältnissen am Einbauort an einer anderen Stelle der Fahrzeugkarosserie außerhalb und entfernt von dem Leuchtengehäuse angeordnet werden. Nachteilig sind jedoch die mit der Ein- und Auskopplung des Lichtes verbundenen Lichtverluste, die neben einer geringeren Lichtstärke der zweiten Leuchteneinheit auch zu einer hohen thermischen Belastung von benachbarten Bauteilen führen, sowie die bauteilbedingt hohen Herstellungskosten. Als weiterer Nachteil kommt hinzu, dass sich bei der zweiten Leuchteneinheit aufgrund der seriellen Auskopplung des Lichtes eine inhomogene Lichtstärkeverteilung über die ringförmige Lichtaustrittsfläche ergibt. Neben einer ungünstigen Lichtverteilung kommt als weiterer Nachteil noch ein relativ hohes Gewicht hinzu. Des Weiteren können eckige Fahrzeugleuchten mit einer ringförmigen Lichtaustrittsfläche der zweiten Leuchteneinheit mit Lichtleitern nur mittels Umlenkelementen realisiert werden, die neben höheren Herstellungskosten weitere Lichtverluste zur Folge haben. Demzufolge kann die zweite Leuchteneinheit auch bei dieser Bauart nur als Sekundärleuchte mit geringer erforderlicher Lichtstärke verwendet werden.

Aus der DE 199 16 845 A1 ist eine Fahrzeugleuchte bekannt die eine erste Leuchteneinheit mit einen Primärreflektor und eine zweite Leuchteneinheit mit einen axial hinter dem Primärreflektor radial aussen überragender Sekundärreflektor aufweist, wobei beider Leuchteinheiten konzentrisch zueinander angeordnet sind.

Es ist daher die Aufgabe der vorliegenden Erfindung, eine kompakte und preisgünstige Fahrzeugleuchte der eingangs genannten Bauart vorzuschlagen, bei der die zweite Leuchteneinheit mit einer ringförmigen Lichtaustrittsfläche bei weitgehender Gestaltungsfreiheit der Leuchtenform eine hohe Lichtstärke mit formbarer und möglichst homogener Lichtverteilung aufweist.

Diese Aufgabe wird erfindungsgemäß in Verbindung mit dem Oberbegriff des Anspruches 1 dadurch gelöst, dass beide Leuchteneinheiten in einem gemeinsamen Leuchtengehäuse mit einer einzigen Abdeckscheibe derart konzentrisch zueinander angeordnet sind, dass die Sekundärlichtquelle auf einer Leuchtenachse entgegen einer gemeinsamen Hauptlichtaustrittsrichtung beider Leuchteneinheiten axial hinter dem Primärreflektor angeordnet ist, und dass die zweite Leuchteneinheit einen axial hinter dem Primärreflektor und der Sekundärlichtquelle angeordneten und den Primärreflektor radial außen überragenden Sekundärreflektor mit einer reflektierenden Innenseite aufweist, wobei der Primärreflektor der ersten Leuchteinheit zur Erzeugung eines Kurven- und Abbiegelichtes ein optisches Element zur Erzeugung von von Kurvenlicht vorgelagert ist, das ein Teil des Lichtes der Primärlichtquelle in die Kurvenichtrichtung ablenkt.

Vorteilhafte Ausgestaltungen der erfindungsgemäßen Fahrzeugleuchte sind in den Unteransprüchen 2 bis 11 angegeben.

Durch die axial hintereinander angeordneten Leuchteneinheiten ergibt sich eine insgesamt kompakte Leuchteneinheit, die durch Montage in einem gemeinsamen Leuchtengehäuse preiswert herstellbar und einfach montierbar ist. Die koaxial um die innere Lichtaustrittsfläche der ersten Leuchteneinheit angeordnete ringförmige äußere Lichtaustrittsfläche der zweiten Leuchteneinheit ergibt sich dabei dadurch, dass das Licht der Sekundärlichtquelle mittels des Sekundärreflektors in die äußere Ringfläche reflektiert wird, die durch den radialen Überstand des Sekundärreflektors gegenüber dem Primärreflektor der ersten Leuchteneinheit gebildet wird. Dabei ergibt sich automatisch eine weitgehend homogene Verteilung der Lichtstärke in der ringförmigen äußeren Lichtaustrittsfläche. Da das Licht der Sekundärlichtquelle weitgehend verlustfrei in die äußere Lichtaustrittsfläche geleitet wird, kann die zweite Leuchteneinheit nunmehr auch als Sekundärleuchte mit hoher erforderlicher Lichtstärke, wie z.B. als Tagfahrleuchte oder als Positionsleuchte, verwendet werden. Auch kann die Leuchtenform im Gegensatz zur Verwendung von Lichtleitern nunmehr weitgehend frei gestaltet werden, so dass in der erfindungsgemäßen Bauform neben runden und ovalen Leuchten auch Rechteck- und Breitbandleuchten realisiert werden können.

Gemäß einer bevorzugten Ausführungsform ist die der Sekundärlichtquelle zugewandte reflektierende bzw. verspiegelte Innenseite des Sekundärreflektors als ein Freiformreflektor derart ausgebildet, dass ein Brennpunkt F am Ort der Sekundärlichtquelle angeordnet ist von dem das Licht der Sekundärlichtquelle zur äußeren Lichtaustrittsfläche geleitet wird.

Nach einer weiteren bevorzugten Ausführungsform der Erfindung wird die Reflexion des Lichtes zwischen der der Sekundärlichtquelle zugewandten reflektierenden Innenseite des Sekundärreflektors und der der Sekundärlichtquelle zugewandten Rückseite des Primärreflektors vorteilhaft dadurch verbessert, dass die Rückseite des Primärreflektors als Zusatzreflektor der zweiten Leuchteneinheit ausgebildet ist, was zweckmäßig und kostengünstig durch eine Verspiegelung der Rückseite des Primärreflektors erreichbar ist.

Bei dieser Bauform wird die Reflexion des Lichtes zwischen der reflektierenden Innenseite des Sekundärreflektors und der Rückseite des Primärreflektors vorteilhaft durch eine Ausbildung der Rückseite des Primärreflektors als Zusatzreflektor der zweiten Leuchteneinheit verbessert. Hierzu wird die Rückseite des Primärreflektors zusätzlich zu einer Verspiegelung vorteilhaft mit einer den Sekundärreflektor unterstützenden Freiform versehen. Hierdurch wird auch das Licht, das von der Sekundärlichtquelle auf die Rückseite des Primärreflektors trifft, unmittelbar in den Bereich der äußeren Lichtaustrittsfläche reflektiert.

Zur Reduzierung des Platzbedarfs und der Herstellungskosten, sowie zur Erleichterung von Wartungs- und Reparaturarbeiten an der Fahrzeugleuchte sind die Primärlichtquelle und die Sekundärlichtquelle vorteilhaft in Form einer Zweifadenlampe in einer gemeinsamen Glühlampe mit einem einzigen Lampensockel zusammengefasst, z.B. in Form einer Zweifaden-Halogen-Glühlampe. Grundsätzlich ist es aber auch möglich, zwei separate Lichtquellen zu verwenden.

Gemäß einer weiteren bevorzugten Ausführungsform der Erfindung ist im Bereich der äußeren Lichtaustrittsfläche ein als ein Lichtauskoppelelement ausgebildeter Lichtleiter angeordnet. Der Lichtleiter ist zur Vermeidung einer Beeinträchtigung der Lichtstärke der zweiten Leuchteneinheit zumindest in Richtung der Hauptlichtaustrittsrichtung weitgehend ungehindert von dem Licht der Sekundärlichtquelle durchleuchtbar und trägt zur Formgebung bei.

Da bei dem Aufbau der erfindungsgemäßen Fahrzeugleuchte der Primärreflektor der ersten Leuchteneinheit weitgehend freistehend in dem Leuchtengehäuse angeordnet ist, kann der Primärreflektor zur Erzeugung eines Kurven- und / oder Abbiegelichtes mit relativ geringem Aufwand zumindest teilweise um eine Hochachse schwenkbar ausgebildet werden. So ist es beispielsweise möglich, dass der Primärreflektor der ersten Leuchteneinheit vertikal geteilt ist, und dass der der Fahrzeugsymmetrieebene zugewandte innere Teil des Primärreflektors um die Hochachse schwenkbar gelagert ist. Bei verschwenktem Primärreflektor wird das Licht der Primärlichtquelle dann zur Ausleuchtung des entsprechenden Seitenbereichs, d.h. der Kurveninnenseite oder einer Seitenstraße, konzentriert seitlich abgestrahlt. Das Kurvenlicht kann auch durch einen statischen zusätzlichen Reflektor bzw. ein zusätzliches, dem Primärreflektor vorgelagertes, Reflektorteil erzeugt werden. Auch ist es möglich, das Kurvenlicht durch ein optisches Element, beispielsweise durch eine Abdeckscheibe mit Umlenkprismen oder eine axial versetzte Linse, zu erzeugen.

Weitere Einzelheiten der Erfindung ergeben sich aus der nachstehenden ausführlichen Beschreibung und den beigefügten Zeichnungen, in denen bevorzugte Ausführungsformen der Erfindung beispielhaft veranschaulicht sind.

In den Zeichnungen zeigen:
- Figur 1:: eine Fahrzeugleuchte in einem schematischen Seitenschnitt,
- Figur 2:: eine weitere Fahrzeugleuchte in einem schematischen Horizontalschnitt mit Kurvenlicht, ,
- Figur 3:: die Fahrzeugleuchte von Fig.2 in einer Frontansicht,
- Figur 4:: eine Fahrzeugleuchte in einem schematischen Horizontalschnitt mit einem optischen Element zur Erzeugung von Kurvenlicht und
- Figur 5:: eine Fahrzeugleuchte in einem schematischen Horizontalschnitt mit einem zusätzlichen Reflektorteil zur Erzeugung von Kurvenlicht.

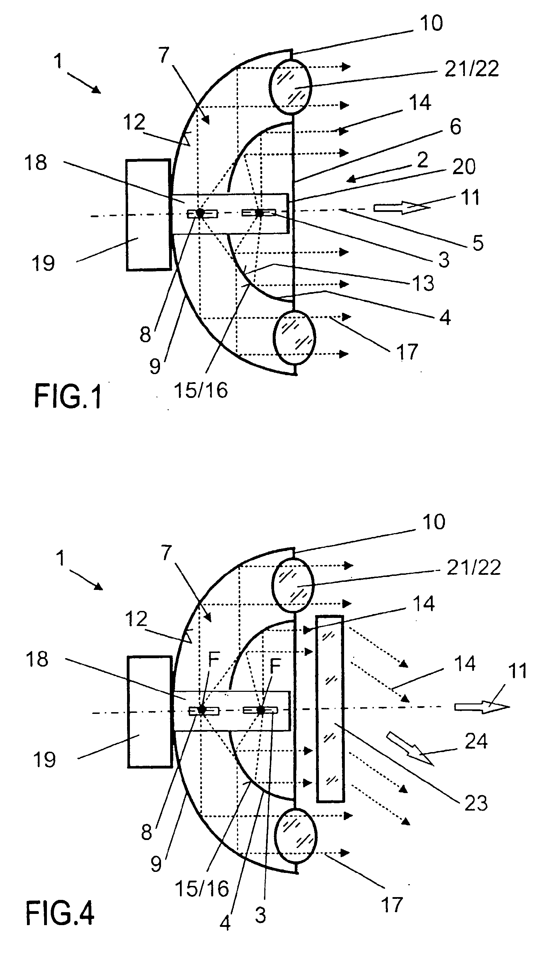

In einer ersten Bauform nach Fig. 1 umfasst eine Fahrzeugleuchte 1 eine erste Leuchteneinheit 2 mit einer Primärlichtquelle 3, einem Primärreflektor 4, und einer im Bereich einer Leuchtenachse 5 angeordneten geschlossenen zentralen Lichtaustrittsfläche 6 und eine zweite Leuchteneinheit 7 mit einer Sekundärlichtquelle 8, einem Sekundärreflektor 9, und einer koaxial um die innere Lichtaustrittsfläche 6 der ersten Leuchteneinheit 2 angeordneten ringförmigen äußeren Lichtaustrittsfläche 10. Die Sekundärlichtquelle 8 der zweiten Leuchteneinheit 7 ist auf der Leuchtenachse 5 entgegen einer gemeinsamen Hauptlichtaustrittsrichtung 11 beider Leuchteneinheiten 2, 7 axial hinter dem Primärreflektor 4 angeordnet. Der Sekundärreflektor 9 der zweiten Leuchteneinheit 7 weist eine reflektierende Innenseite 12 auf, befindet sich axial hinter dem Primärreflektor 4 der ersten Leuchteneinheit 2 und hinter der Sekundärlichtquelle 8, und überragt den Primärreflektor 4 radial außen, wodurch sich die ringförmige äußere Lichtaustrittsfläche 10 ergibt.

Die der Primärlichtquelle 3 zugewandte reflektierende Innenseite 13 des Primärreflektors 4 ist als Abschnitt eines Rotationsparaboloids ausgebildet, dessen Brennpunkt F am Ort der Primärlichtquelle 3 und dessen Rotationsachse in der Leuchtenachse 5 angeordnet sind. Hierdurch ergibt sich im Bereich der zentralen Lichtaustrittsfläche 6 eine weitgehend parallele Abstrahlung des Lichtes 14 der Primärlichtquelle 3 in Richtung der Leuchtenachse 5 bzw. der Hauptlichtaustrittsrichtung 11.

Der Sekundärreflektor 9 ist als ein Freiformreflektor ausgebildet. Die der Sekundärlichtquelle 8 zugewandte reflektierende Innenseite 12 des Sekundärreflektors 9 ist derart ausgebildet, dass ein Brennpunkt F am Ort der Sekundärlichtquelle 8 angeordnet ist, von dem das Licht der Sekundärlichtquelle 8 zur äußeren Lichtaustrittsfläche 10 geleitet wird. Des Weiteren ist die Rückseite 15 des Primärreflektors 4 bei gegenüber der Innenseite 13 weitgehend unveränderter Kontur zur Bildung eines Zusatzreflektors 16 ebenfalls verspiegelt. Mit dem Sekundärreflektor 9 und dem Zusatzreflektor 16 wird erreicht, dass das Licht 17 der Sekundärlichtquelle 8 weitgehend verlustfrei in die ringförmige äußere Lichtaustrittsfläche 10 geleitet und weitgehend parallel in Richtung der Leuchtenachse 5 bzw. der Hauptlichtaustrittsrichtung 11 abgestrahlt wird. Es ist aber bei entsprechender Ausformung auch eine Bündelung möglich.

Die Primärlichtquelle 3 und die Sekundärlichtquelle 8 sind kostengünstig und platzsparend in Form einer Zweifadenlampe in einer gemeinsamen Lampe 18 mit einem einzigen Lampensockel 19 und einer Blendabdeckung 20 zusammengefasst.

Im Bereich der äußeren Lichtaustrittsfläche 10 der zweiten Leuchteneinheit 7 ist ein als Lichtauskoppelelement 21 ausgebildeter Lichtleiter 22 angeordnet, der zumindest in Richtung der Hauptlichtaustrittsrichtung 11 von dem Licht der Sekundärlichtquelle 8 durchleuchtbar ist.

Mit der erfindungsgemäßen Fahrzeugleuchte 1 mit axialer Staffelung der Lichtquellen 3, 8 und Reflektoren 4, 9 und koaxialer Anordnung der Lichtaustrittsflächen 6, 10 wird bei kompakter und kostengünstiger Bauweise und weitgehender Gestaltungsfreiheit der Leuchtenform bei der zweiten Leuchteneinheit 7 eine erhöhte Lichtstärke und eine homogenere Lichtverteilung erreicht. Die zweite Leuchteneinheit 7 kann somit als Sekundärleuchte mit hoher Lichtstärke, wie z.B. als Tagfahrleuchte oder als Positionsleuchte, verwendet werden.

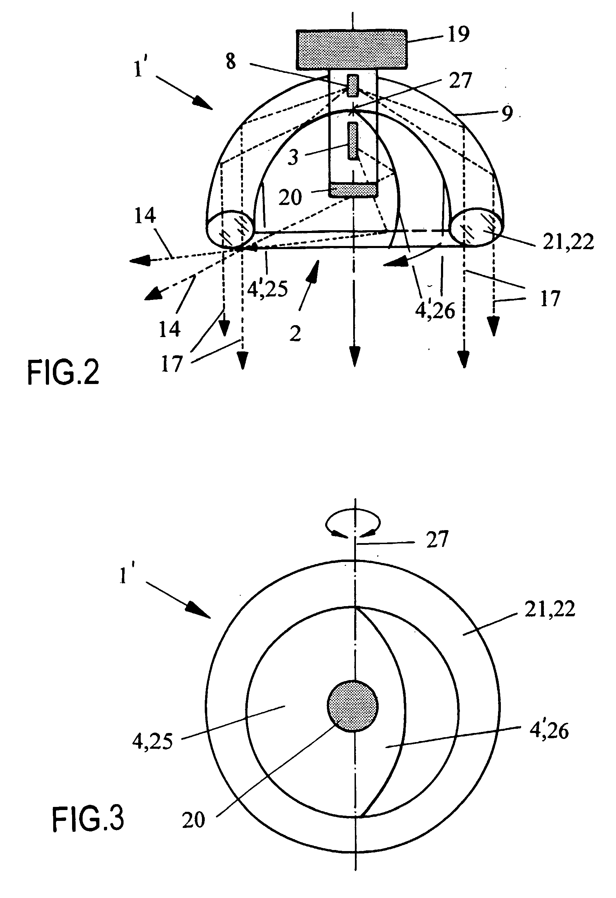

In einer weiteren Bauform weist die Fahrzeugleuchte 1' nach Fig. 2 eine erste Leuchteneinheit 2 auf, deren Primärreflektor 4' vertikal hälftig geteilt ist. Die äußere, der Fahrzeugsymmetrieebene abgewandte Hälfte bzw. der äußere Teil 25 des Primärreflektors 4' ist feststehend angeordnet, wogegen die innere, der Fahrzeugsymmetrieebene zugewandte Hälfte bzw. der innere Teil 26 des Primärreflektors 4' zur Erzeugung eines Kurven- und / oder Abbiegelichtes um eine Hochachse 27 schwenkbar gelagert ist. Die seitliche Abstrahlung des Lichtes 14 der Primärlichtquelle 3 der ersten Leuchteneinheit 2 bei aktiviertem Kurven- bzw. Abbiegelicht, d.h. bei einer verschwenkten inneren Hälfte 26 des Primärreflektors 4', ist in Fig. 2 veranschaulicht. Das entsprechende äußere Erscheinungsbild der Fahrzeugleuchte 1' in Blickrichtung von vorn entgegen der Hauptlichtaustrittsrichtung 11 ist in Fig. 3 dargestellt.

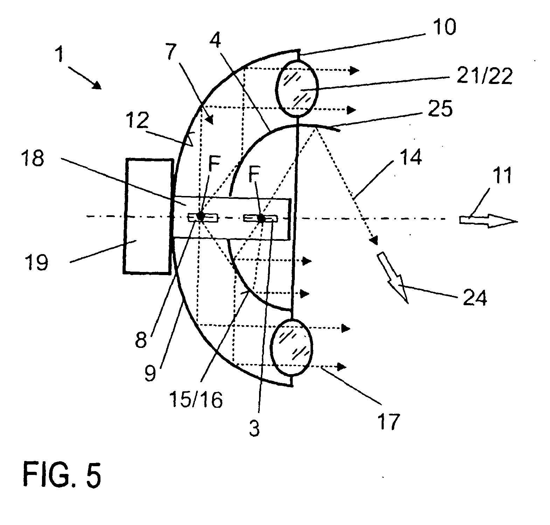

In der Ausführung nach Figur 4 ist dem Primärreflektor 4 ein optisches Element 23 zur Erzeugung von Kurvenlicht vorgelagert. Das optische Element 23 weist dabei nicht dargestellte Ablenkprismen auf, um das vom Primärreflektor 4 abgestrahlte Licht 14 in eine Kurvenlichtrichtung 24 abzulenken.

In der Ausführung nach Figur 5 ist dem Primärreflektor 4 ein zusätzliches Reflektorteil 25 vorgelagert. Das zusätzliche Reflektorteil 25 lenkt einen Teil des Lichtes 14 der Primärlichtquelle 3 in die Kurvenlichtrichtung 24 ab.

## Patentansprüche

1. Fahrzeugleuchte, insbesondere Frontleuchte eines Kraftfahrzeuges, mit einer ersten Leuchteneinheit (2), die eine Primärlichtquelle (3) und einen Primärreflektor (4) umfasst und eine innere Lichtaustrittsfläche (6) aufweist, und mit einer zweiten Leuchteneinheit (7), die eine Sekundärlichtquelle (8) und eine koaxial um die innere Lichtaustrittsfläche (6) der ersten Leuchteneinheit (2) angeordnete ringförmige äussere Lichtaustrittsfläche (10) aufweist, wobei beide Leuchteneinheiten (2, 7) derart konzentrisch zueinander angeordnet sind, dass die Sekundärlichtquelle (8) auf einer Leuchtenachse (5) entgegen einer gemeinsamen Haupttichtaustrittsrichtung (11) beider Leuchteneinheiten (2, 7) axial hinter dem Primärreflektor (4) angeordnet ist, und dass die zweite Leuchteneinheit (7) einen axial hinter dem Primärreflektor (4) und der Sekundärlichtquelle (8) angeordneten und den Primärreflektor (4) radial aussen überragenden Sekundärreflektor (9) mit einer reflektierenden Innenseite (12) aufweist, **dadurch gekennzeichnet dass** dem Primärreflektor (4) der ersten Leuchteneinheit (2) zur Erzeugung eines Kurven- und/oder Abbiegelichtes ein optisches Element (23) zur Erzeugung von Kurvenlicht vorgelagert ist, das einen Teil des Lichtes (14) der Primärlichtquelle (3) in die Kurvenlichtrichtung (24) ablenkt.

2. Fahrzeugleuchte nach Anspruch 1, **dadurch gekennzeichnet, dass** die der Sekundärlichtquelle (8) zugewandte reflektierende Innenseite (12) des Sekundärreflektors (9) als ein Freiformreflektor derart ausgebildet ist, dass ein Brennpunkt F am Ort der Sekundärlichtquelle (8) angeordnet ist von dem das Licht der Sekundärlichtquelle (8) zur äußeren Lichtaustrittsfläche (10) geleitet wird.

3. Fahrzeugleuchte nach Anspruch 1 oder 2, **dadurch gekennzeichnet, dass** die der Sekundärlichtquelle (8) zugewandte Rückseite (15) des Primärreflektors (4) als Zusatzreflektor (16) der zweiten Leuchteneinheit (7) ausgebildet ist.

4. Fahrzeugleuchte nach Anspruch 3, **dadurch gekennzeichnet, dass** die Rückseite (15) des Primärreflektors (4) zur Bildung des Zusatzreflektors (16) verspiegelt ist.

5. Fahrzeugleuchte nach einem der Ansprüche 1 bis 4, **dadurch gekennzeichnet, dass** die Primärlichtquelle (3) und die Sekundärlichtquelle (8) in Form einer Zweifadenlampe in einer gemeinsamen Lampe (18) mit einem einzigen Lampensockel (19) zusammengefasst sind.

6. Fahrzeugleuchte nach einem der Ansprüche 1 bis 5, **dadurch gekennzeichnet, dass** ein als Lichtauskoppelelement (21) ausgebildeter Lichtleiter (22) im Bereich der äußeren Lichtaustrittsfläche (10) angeordnet ist, und dass der Lichtleiter (22) zumindest in Richtung der Hauptlichtaustrittsrichtung (11) von dem Licht der Sekundärlichtquelle (8) durchleuchtbar ist.

7. Fahrzeugleuchte nach einem der Ansprüche 1 bis 6, **dadurch gekennzeichnet, dass** der Primärreflektor (4') der ersten Leuchteneinheit (2) zur Erzeugung eines Kurven- und / oder Abbiegelichtes zumindest teilweise um eine Hochachse (27) schwenkbar ausgebildet ist.

8. Fahrzeugleuchte nach Anspruch 7, **dadurch gekennzeichnet, dass** der Primärreflektor (4') der ersten Leuchteneinheit (2) vertikal geteilt ist, und dass der der Fahrzeugsymmetrieebene zugewandte innere Teil (26) des Primärreflektors (4') um die Hochachse (27) schwenkbar gelagert ist.

9. Fahrzeugleuchte nach einem der Ansprüche 1 bis 6, **dadurch gekennzeichnet, dass** dem Primärreflektor (4) der ersten Leuchteneinheit (2) zur Erzeugung eines Kurven- und / oder Abbiegelichtes ein zusätzliches Reflektorteil (25) vorgelagert ist, das einen Teil des Lichtes (14) der Primärlichtquelle (3) in die Kurvenlichtrichtung (24) ablenkt.

10. Fahrzeugleuchte nach Ansprüche 1 bis 6, **dadurch gekennzeichnet, dass** das optische Element (23) nicht dargestellte Ablenkprismen auf weist.

11. Fahrzeugleuchte nach Ansprüche 1 bis 6, **dadurch gekennzeichnet, dass** das optische Element (23) als eine axial versetzte Linse ausgebildet ist.

## Claims

1. A vehicle light, more especially front light of a motor vehicle, with a first light unit (2), which comprises a primary light source (3) and a primary reflector (4) and has an inner light outlet face (6), and with a second light unit (7), which has a secondary light source (8) and an annular outer light outlet face (10) arranged coaxially around the inner light outlet face (6) of the first light unit (2), wherein the two light units (2, 7) are arranged concentrically with respect to one another in such a way that the secondary light source (8) is arranged on a light axis (5) counter to a common main light outlet direction (11) of the two light units (2, 7) axially behind the primary reflector (4), and in that the second light unit (7) has a secondary reflector (9) arranged axially behind the primary reflector (4) and the secondary light source (8) and projecting radially outwardly over the primary reflector (4), the secondary reflector having a reflective inner side (12), **characterised in that** an optical element (23) for generating cornering light is mounted in front of the primary reflector (4) of the first light unit (2) to generate a cornering and/or turning off light and deflects a part of the light (14) of the primary light source (3) in the cornering light direction (24).

2. A vehicle light according to claim 1, **characterised in that** the reflective inner side (12) of the secondary reflector (9) facing the secondary light source (8) is configured as a free-form reflector in such a way that a focal point F is arranged at the site of the secondary light source (8), from which the light of the secondary light source (8) is guided to the outer light outlet face (10).

3. A vehicle light according to claim 1 or 2, **characterised in that** the rear (15) of the primary reflector (4) facing the secondary light source (8) is configured as an additional reflector (16) of the second light unit (7).

4. A vehicle light according to claim 3, **characterised in that** the rear (15) of the primary reflector (4) is metallised to form the additional reflector (16).

5. A vehicle light according to any one of claims 1 to 4, **characterised in that** the primary light source (3) and the secondary light source (8) are combined in the form of a two-filament lamp in a common lamp (18) with a single lamp base (19).

6. A vehicle light according to any one of claims 1 to 5, **characterised in that** a light guide (22) configured as a light output element (22) is arranged in the region of the outer light outlet face (10), and **in that** the light guide (22) can be shone through, at least in the direction of the main light outlet direction (11), by the light of the secondary light source (8).

7. A vehicle light according to any one of claims 1 to 6, **characterised in that** the primary reflector (4') of the first light unit (2) is configured so as to be at least partially pivotable about a vertical axis (27) to generate a cornering and/or turning off light.

8. A vehicle light according to claim 7, **characterised in that** the primary reflector (4') of the first light unit (2) is divided vertically, and **in that** the inner part (26) of the primary reflector (4') facing the plane of symmetry of the vehicle is pivotably mounted about the vertical axis (27).

9. A vehicle light according to any one of claims 1 to 6, **characterised in that** an additional reflector part (25) is mounted in front of the primary reflector (4) of the first light unit (2) to generate a cornering and/or turning off light and deflects a part of the light (14) of the primary light source (3) in the cornering light direction (24).

10. A vehicle light according to claims 1 to 6, **characterised in that** the optical element (23) has deflection prisms, not shown.

11. A vehicle light according to claims 1 to 6, **characterised in that** the optical element (23) is configured as an axially offset lens.

## Revendications

1. Phare de véhicule, notamment projecteur frontal de véhicule automobile comportant :
- une première unité d'éclairage (2) ayant une source de lumière primaire (3), un réflecteur primaire (4) et une surface de sortie de lumière (6) intérieure,
- une seconde unité d'éclairage (7) ayant une source de lumière secondaire (8) et une surface de sortie de lumière (10) extérieure annulaire, entourant coaxialement la surface de sortie de lumière (6) intérieure de la première unité d'éclairage (2),
les deux unités d'éclairage (2, 7) sont installées concentriquement l'une par rapport à l'autre,
la source de lumière secondaire (8) est installée sur l'axe (5) du projecteur, axialement derrière le réflecteur primaire (4) dans la direction opposée à la direction commune principale de sortie de lumière (11) des deux unités d'éclairage (2, 7), et
la seconde unité d'éclairage (7) comporte un réflecteur secondaire (9) installé axialement derrière le réflecteur primaire (4) et la source de lumière secondaire (8) et dépasse radialement vers l'extérieur du réflecteur primaire (4) en ayant une face intérieure réfléchissante (12),
**caractérisé en ce qu'**
un élément optique (23) précède le réflecteur primaire (4) de la première unité d'éclairage (2) pour générer l'éclairage en courbe et/ou l'éclairage de déviation, cet élément optique déviant une partie du faisceau lumineux (14) de la source de lumière primaire (3) dans la direction d'éclairage de la courbe (24).

2. Phare de véhicule selon la revendication 1,
**caractérisé en ce que**
la face intérieure (12) réfléchissante, du réflecteur secondaire (9), tournée vers la source de lumière secondaire (8) est de forme libre et son foyer (F) correspond à l'emplacement de la source de lumière secondaire (8) pour en diriger la lumière vers la surface extérieure de sortie de lumière (10).

3. Phare de véhicule selon la revendication 1 ou 2,
**caractérisé en ce que**
la face arrière du réflecteur primaire (4) tournée vers la source de lumière secondaire (8) est un réflecteur supplémentaire (16) pour la seconde unité d'éclairage (7).

4. Phare de véhicule selon la revendication 3,
**caractérisé en ce que**
la face arrière (15) du réflecteur primaire (4) est réfléchissante et forme ainsi le réflecteur supplémentaire (16) .

5. Phare selon l'une des revendications 1 à 4,
**caractérisé en ce que**
la source de lumière primaire (3) et la source de lumière secondaire (8) sont regroupées dans une lampe commune (18) à deux filament dont le culot (19) est unique.

6. Phare de véhicule selon l'une des revendications 1 à 5,
**caractérisé en ce qu'**
un guide de lumière (22), sous forme d'élément de découplage de lumière (21) est prévu au niveau de la surface extérieure de sortie de lumière (10), et
ce guide de lumière (22) est traversé par la lumière, au moins dans la direction principale de sortie de lumière (11), pour la lumière de la source de lumière secondaire (8).

7. Phare de véhicule selon l'une des revendications 1 à 6,
**caractérisé en ce que**
pour générer un éclairage en courbe et/ou un éclairage de déviation, le réflecteur primaire (4') de la première unité d'éclairage (2) pivote au moins en partie autour d'un axe vertical (27).

8. Phare de véhicule selon la revendication 7,
**caractérisé en ce que**
le réflecteur primaire (4') de la première unité d'éclairage (2) est divisé verticalement et sa partie intérieure (26) tournée vers le plan de symétrie du véhicule, pivote autour de l'axe vertical (27).

9. Phare de véhicule selon l'une des revendications 1 à 6,
**caractérisé en ce que**
pour générer l'éclairage en courbe et/ ou l'éclairage de déviation, le réflecteur primaire (4) de la première unité d'éclairage (2) est précédé d'une partie de réflecteur supplémentaire (25) qui dévie dans la direction de la courbe (24), une partie de la lumière (14) de la source de lumière primaire (3).

10. Phare de véhicule selon les revendications 1 à 6,
**caractérisé en ce que**
l'élément optique (23) comporte des prismes de déflection non représentés.

11. Phare de véhicule selon les revendications 1 à 6,
**caractérisé en ce que**
l'élément optique (23) est une lentille décalée axialement.
